# EUROPEAN PATENT SPECIFICATION

(11) **EP 4 507 394 B1**
(45) Date of publication and mention of the grant of the patent: **18.02.2026**
(21) Application number: 23784072.3
(22) Date of filing: 12.01.2023
(51) Int. Cl.: H04W 52/02, H04W 72/04, H04W 68/02

(54) **WAKE-UP SIGNAL (WUS) RECEIVING METHOD AND SENDING METHOD**
AUFWECKSIGNAL (WUS)-EMPFANGSVERFAHREN UND SENDEVERFAHREN
PROCÉDÉ DE RÉCEPTION ET PROCÉDÉ D'ENVOI DE SIGNAL DE RÉVEIL (WUS)

(30) Priority: 08.04.2022 CN 202210368113
(43) Date of publication of application: 12.02.2025
(73) Proprietor: ZTE Corporation, Shenzhen Guangdong 518057 (CN)
(72) Inventor: YANG, Weiwei, Shenzhen, Guangdong 518057 (CN); DAI, Bo, Shenzhen, Guangdong 518057 (CN); CHEN, Mengzhu, Shenzhen, Guangdong 518057 (CN); LIU, Kun, Shenzhen, Guangdong 518057 (CN); HU, Youjun, Shenzhen, Guangdong 518057 (CN)
(74) Representative: Savi, Massimiliano
(86) International application number: PCT/CN2023/071979
(87) International publication number: WO 2023/193508

(56) References cited:
- WO-A1-2021/062792
- CN-A- 110 958 672
- CN-A- 115 835 343
- US-A1- 2020 281 042
- US-A1- 2021 153 127
- US-A1- 2021 153 127
- US-A1- 2022 022 137

## Description

### TECHNICAL FIELD

The present disclosure relates to the field of communications technologies, in particular to a wake-up signal (WUS) receiving method and sending method, a terminal device, a network node, and a computer-readable storage medium.

### BACKGROUND

To meet requirements of terminal devices for extended battery life, an existing technology proposes a low-power wake-up mechanism in which a terminal device uses a separate receiver to receive a low-power WUS for waking up a main receiver to perform data transmission and data reception. When the terminal device does not detect a low-power WUS, the main receiver remains in a deep sleep state. This approach effectively reduces power consumption of the terminal device. However, the existing technology does not provide specific methods for sending a WUS on a network node side and receiving a WUS on a terminal device side.

In US 2022/0022137 A1, a communication method includes receiving monitoring information which includes information of a search space set corresponding to a WUS; determining at least one of a monitoring periodicity of the WUS or a monitoring occasion in the monitoring periodicity based on the information of the search space set; receiving the WUS from the network device, where the WUS includes wake-up information of at least one terminal device; and performing PDCCH monitoring based on wake-up information of the terminal device in on duration of at least one discontinuous reception DRX cycle corresponding to the WUS, where the wake-up information of at least one terminal device includes the wake-up information of the terminal device.

US 2020/0281042 A1 provides an indication signal configuration method and device. The method includes: sending, by a network device, first configuration information and second configuration information; sending a first indication signal on a first carrier; and sending a second indication signal on a second carrier, where the first configuration information is used to indicate duration of the first indication signal corresponding to the first carrier, the second configuration information is used to indicate duration of the second indication signal corresponding to the second carrier, the first terminal device is a terminal device that needs to receive the first indication signal, and the second terminal device is a terminal device that needs to receive the second indication signal.

### SUMMARY

Embodiments of the present disclosure, aiming to solve at least one of the above-mentioned technical problems, provide a WUS receiving method and sending method, a terminal device, a network node, and a computer-readable storage medium.

The features of the WUS receiving method and sending method, the terminal device, the system, and the computer-readable storage medium according to embodiments of the present disclosure are set out in the appended set of claims.

### BRIEF DESCRIPTION OF DRAWINGS

The accompanying drawings are used to provide further understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
FIG. 1 is a flowchart of a WUS receiving method provided by an embodiment of the present disclosure;
FIG. 2 is a flowchart of a WUS sending method provided by an embodiment of the present disclosure;
FIG. 3 is a schematic diagram of a WUS sending and receiving process provided by a specific example of an embodiment of the present disclosure;
FIG. 4 is a schematic diagram of a WUS sending and receiving process provided by another specific example of an embodiment of the present disclosure;
FIG. 5 is a schematic diagram of a WUS sending and receiving process provided by another specific example of an embodiment of the present disclosure;
FIG. 6 is a schematic diagram of a WUS sending and receiving process provided by another specific example of an embodiment of the present disclosure;
FIG. 7 is a schematic diagram of a WUS sending and receiving process provided by another specific example of an embodiment of the present disclosure;
FIG. 8 is a schematic diagram of a terminal device provided by an embodiment of the present disclosure;
FIG. 9 is a schematic diagram of a network node provided by an embodiment of the present disclosure;
FIG. 10 is a schematic diagram of a terminal device provided by an embodiment of the present disclosure; and

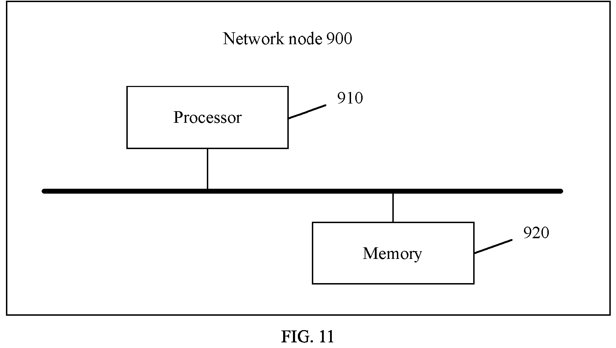

FIG. 11 is a schematic diagram of a network node provided by an embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the particular embodiments described herein are only intended to explain the present disclosure and are not intended to limit the present disclosure.

It should be understood that, in the description of the embodiments of the present disclosure, if "first" and "second", etc. are referred to, it is only for the purpose of distinguishing technical features, and shall not be understood as indicating or implying relative importance or implying the number of the indicated technical features or implying the sequence of the indicated technical features. "At least one" means one or more, and "a plurality of" means two or more. The term "and/or" describes an association relationship of associated objects and represents that there may be three kinds of relationships. For example, A and/or B may represent three cases: only A exists, both A and B exist, and only B exists. A and B may be singular or plural. The character "/" generally indicates an "or" relationship between associated objects before and after the character. "At least one of" and a similar expression means any combination of the items, including a single item or any combination of a plurality of items. For example, at least one of a, b, or c may indicate a, b, c, a and b, a and c, b and c, or a, b, and c, where a, b, and c may be singular or plural.

Further, the technical features involved in various embodiments of the present disclosure described below may be combined with each other as long as they do not conflict with each other.

A network may send paging messages to terminal devices (User Equipment, UE) in idle state and connected state. A paging process may be triggered by a core network to prompt a specific UE to receive a paging request or may be triggered by an evolved NodeB (eNB) to notify a system of an update of information. The paging messages are scheduled using a physical downlink control channel (PDCCH) scrambled by a radio network temporary identifier (RNTI) and transmitted on a physical downlink shared channel (PDSCH). The terminal device detects a corresponding PDCCH at a paging occasion (PO) to determine whether a PDSCH indicated by the PDCCH carries a paging message. If the terminal device does not detect the corresponding PDCCH at the PO, it indicates that there is no paging message at this PO. In this case, the terminal device enters into a sleep state and does not receive data until the terminal device performs detection at the next PO. The mode is called discontinuous reception (DRX). To be specific, the terminal device needs to perform blind detection of the PDCCH at each PO, which causes large power consumption of the terminal device.

To reduce the power consumption of the terminal device, a WUS is introduced, which is sent by a base station before each PO for indicating whether to perform PDCCH detection. The terminal device first detects the WUS, and determines whether to detect a corresponding PDCCH according to a detection result of the WUS. When the WUS is detected, the terminal device detects a PDCCH corresponding to the WUS, otherwise, the terminal device does not detect the PDCCH. The introduction of the WUS reduces a count of detections of the PDCCH by the terminal device, thereby saving the power consumption of the terminal device. To further reduce the power consumption of the terminal device, an approach is proposed, in which the terminal device uses a separate receiver to receive a low-power WUS for waking up a main receiver to perform data transmission and data reception. When the terminal device does not detect a low-power WUS, the main receiver remains in a deep sleep state. This approach effectively reduces the power consumption of the terminal device. However, an existing technology does not provide a specific implementation of sending and receiving a WUS suitable for a separate receiver.

An embodiment of the present disclosure provides a WUS receiving method and sending method, a terminal device, a network node, and a computer-readable storage medium. With the introduction of a detection window, the terminal device only needs to detect a WUS in the detection window, thereby further reducing power consumption of the terminal device.

Embodiments described in the present disclosure may be implemented in at least one of the following communications systems: a Global System for Mobile Communications (GSM) or any other 2nd generation cellular communications system, a universal mobile telecommunications system (UMTS, 3G) based on basic wideband code division multiple access (W-CDMA), high-speed packet access (HSPA), Long-Term Evolution (LTE), advanced LTE, an IEEE 802.11-based system, an IEEE 802.15-based system and/or 5th generation (5G) mobile or cellular communications system, or a future mobile communications system. However, the embodiments are not limited to the example systems given above but may be other communications systems having necessary attributes to which the solution may be applied by those having ordinary skill in the art.

The communications system includes communication devices which can perform wireless communication with each other using air interface resources. Here, the communication devices include a network node and a terminal device. Wireless communication between the communication devices includes wireless communication between network nodes and between terminal devices.

The network node described in the embodiments of the present disclosure may also be called a network device or a network side device, and may be specifically a base transceiver station (BTS) in GSM or code division multiple access (CDMA), a NodeB (NB) in W-CDMA, an evolved NodeB (eNB), an access point (AP) or a relay station in an LTE network, or a base station (gNB) in a 5G new radio (NR) network, etc., which is not limited herein.

The terminal device described in the embodiments of the present disclosure, also known as terminal equipment, UE, or terminal side device, is a device with a radio transceiver function which may be deployed on land, including an indoor or outdoor device, a handheld device or a vehicle-mounted device; or may be deployed on water (such as on ships); or may be deployed in the air (such as on aircraft, balloons, and satellites). The terminal device may be a UE, where the UE includes a handheld device, a vehicle-mounted device, a wearable device or a computing device that has a wireless communication function. In some implementations, the UE may be a mobile phone, a tablet computer or a computer with a wireless transceiver function. The terminal device may also be a virtual reality (VR) terminal device, an augmented reality (AR) terminal device, a wireless terminal device in industrial control, a wireless terminal device in unmanned driving, a wireless terminal device in telemedicine, a wireless terminal device in smart grid, a wireless terminal device in smart city, a wireless terminal device in smart home, etc.

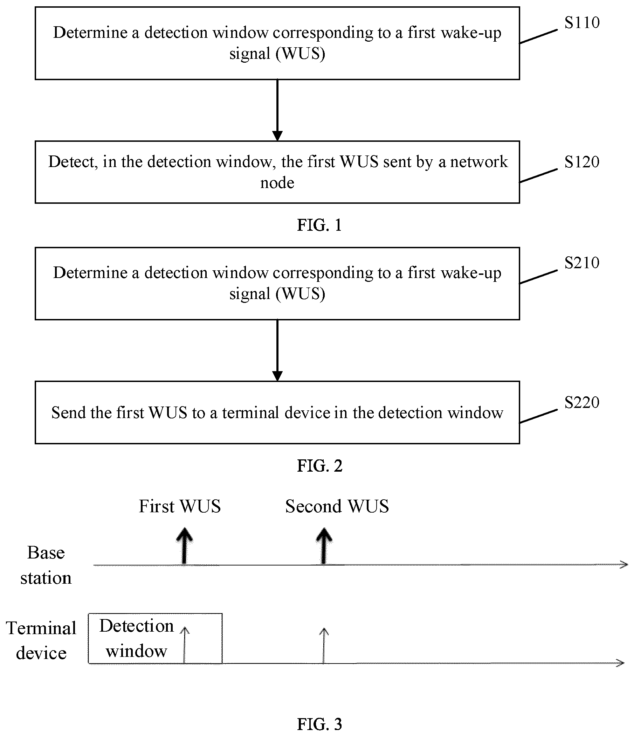

Refer to FIG. 1, which presents a flowchart of a WUS receiving method provided by an embodiment of the present disclosure. The receiving method is applied to a terminal device. An implementation process of the receiving method includes but is not limited to the following steps S110 and S120, which are described in sequence below.

At S110, a detection window corresponding to a first WUS is determined.

In some embodiments, a position of the detection window corresponding to the first WUS is determined in any one of the following manners.

Manner I: The position of the detection window corresponding to the first WUS is determined according to detection window information indicated by signaling, where the detection window information includes at least one of: a period of the detection window, a time domain offset of the detection window, or a time domain length of the detection window. It can be understood that a signaling indication is signaling, sent by a network node to the terminal device, carrying the detection window information. The period of the detection window represents a repeated period of the detection window in time domain. The time domain offset of the detection window represents a time domain offset of a detection window relative to its previous detection window. The time domain length of the detection window represents a length of a single detection window in time domain.

Manner II: The position of the detection window corresponding to the first WUS is determined according to an agreement with the network node. It can be understood that the position of the detection window corresponding to the first WUS can be pre-agreed by the network node and the terminal device, and the terminal device performs detection of the first WUS according to the pre-agreed position of the detection window.

Manner III: The position of the detection window corresponding to the first WUS is determined according to a predefined time domain position and a position at which the first WUS is detected. It can be understood that M time domain positions are pre-defined, where any one of the M time domain positions is a start position of the detection window, and the position at which the first WUS is detected is used as an end position of the detection window.

At S 120, the first WUS sent by the network node is detected in the detection window.

In a possible implementation, the detecting, in the detection window, the first WUS sent by a network node includes: detecting the first WUS at each time domain position of the detection window.

In another possible implementation, the detecting, in the detection window, the first WUS sent by a network node includes: determining, in the detection window according to a pre-determined correspondence between a first preset index and a first time domain resource position, a target time domain position corresponding to the first preset index, and detecting the first WUS at the target time domain position. It should be noted that the first preset index herein is an index corresponding to the terminal device of the embodiment of the present disclosure. In specific implementation, a corresponding first preset index may be configured for each terminal device in advance, or the terminal device determines the first preset index according to a synchronization signal block (SSB) index, or determines the first preset index according to a direction of a receive beam/direction of a transmit beam. Then, a search on the corresponding first time domain resource position is performed according to the first preset index corresponding to the terminal device, to determine the target time domain position, and detection of the first WUS is performed at the corresponding target time domain resource position.

It can be understood that it can also be determined in the embodiment of the present disclosure, according to a detection result of the first WUS, whether to detect a second WUS. The method of the embodiment of the present disclosure further includes the following step S130.

At S130, it is determined according to a preset rule that detection of the second WUS needs to be performed, and detection of the second WUS sent by the network node is performed.

By way of example, the preset rule may include any one or more of:
in a first case, in response to the detected first WUS indicating a first type of information, detection of the second WUS needs to be performed, where the first type of information includes any one of wake-up indication information, or position information of the second WUS;
in a second case, in response to the detected first WUS indicating a second type of information, detection of the second WUS is skipped, where the second type of information includes any one of full wake-up indication information, system message change indication information, or measurement indication information;
in a third case, in response to the first WUS being detected, detection of the second WUS needs to be performed;
in a fourth case, in response to the first WUS being undetected, detection of the second WUS is skipped; or
in a fifth case, in response to signaling which indicates detection of the second WUS being received, detection of the second WUS needs to be performed.

It can be understood that, after it is determined according to the preset rule that detection of the second WUS needs to be performed, detection of the second WUS sent by the network node is performed. The detection of the second WUS sent by the network node includes steps S131 and S132 as follows.

At S131, a second time domain position is determined.

At S132, detection of the second WUS sent by the network node is performed at the second time domain position.

Here, the determining the second time domain position may be implemented in any of the following manners.
Manner I: the second time domain position according to a first time domain position and a first time domain offset;
Manner II: the second time domain position is determined according to the first time domain position, the first time domain offset, and a second group number;
Manner III: the second time domain position is determined according to the first time domain position, the first time domain offset, and a time domain position index; or
Manner IV: the second time domain position is determined according to position information, of the second WUS, carried by the first WUS, where the second time domain position is a time domain position at which the second WUS is located, or a time domain position at which the 1^{st} WUS in a plurality of WUSs corresponding to the second WUS is located, or a time domain position at which the last WUS in the plurality of WUSs corresponding to the second WUS is located.

In some embodiments, the first time domain position may be determined according to at least one of:
the first time domain position being a time domain position at which the first WUS is detected;
the first time domain position being a start position of the detection window corresponding to the first WUS;
the first time domain position being an end position of the detection window corresponding to the first WUS;
the first time domain position being a time domain position at which the 1^{st} WUS in a plurality of WUSs corresponding to the first WUS is located; or
the first time domain position being a time domain position at which the last WUS in the plurality of WUSs corresponding to the first WUS is located.

In some embodiments, the first time domain offset is determined according to at least one of: signaling indication information, preset offset information, terminal device capability information, or subcarrier spacing information.

In some embodiments, the time domain position index is determined according to an index of a second group in which the terminal device is located, or determined according to a preset correspondence between the time domain position index and a time domain resource position.

In some embodiments, the detecting, at the second time domain position, the second WUS sent by the network node includes at least one of steps S1321 and S1322:
At S1321, a second target frequency domain position corresponding to the second WUS is determined according to second information.
At S1322, a second sequence corresponding to the second WUS is determined according to the second information.

Here, the second information is determined by at least one of: a terminal device index, a second group index corresponding to the terminal device, a second group number, or a signaling indication.

In some embodiments, the detecting, in the detection window, the first WUS sent by a network node further includes at least one of:
determining, according to first information, a first target frequency domain position corresponding to the first WUS; or
determining, according to the first information, a first sequence corresponding to the first WUS,
where the first information includes at least one of: a terminal device index, a first group index corresponding to the terminal device, a second preset index, a first parameter, or a first group number.

In some possible implementations, the receiving method provided by the embodiment of the present disclosure further includes: in response to the first WUS being detected, ending detection in the detection window, and using a position at which the first WUS is detected as an end position of the detection window.

In some embodiments, the receiving method provided by the embodiments of the present disclosure may further include one of:
detecting a PDCCH in response to both the first WUS and the second WUS being detected;
skip detecting the PDCCH in response to the second WUS being undetected;
detecting the PDCCH in response to the detected first WUS indicating a second type of information, where the second type of information is used to represent at least one of full wake-up indication information, system message change indication information, or measurement indication information; or
skip detecting the PDCCH in response to the first WUS being undetected.

It can be understood that it is determined, in the embodiment of the present disclosure according to the detection result of the first WUS or detection results of the first WUS and the second WUS, whether to detect a PDCCH.

In some embodiments, the receiving method provided by the embodiment of the present disclosure further includes: searching a PDSCH corresponding to the detected PDCCH for a paging message corresponding to the detected PDCCH; and in response to no paging message corresponding to the detected PDCCH being found, performing a channel measurement, and determining, according to a measurement result, whether to fall back to a conventional paging detection process, or determining, according to the measurement result, whether to continue the WUS detection.

In some embodiments, the receiving method provided by the embodiment of the present disclosure further includes: in response to the detected first WUS indicating a third type of information, falling back, by the terminal device, to a conventional paging detection process, where the third type of information is one of a fallback indication or a measurement indication.

Refer to FIG. 2, which presents a flowchart of a WUS sending method provided by an embodiment of the present disclosure. The sending method is applied to a network node. An implementation process of the sending method includes but is not limited to the following steps S210 and S220, which are described in sequence below.

At S210, a detection window corresponding to a first WUS is determined.

In some embodiments, a position of the detection window corresponding to the first WUS is determined in any of the following manners.

Manner I: The position of the detection window corresponding to the first WUS is determined according to detection window information indicated by signaling, where the detection window information includes at least one of: a period of the detection window, a time domain offset of the detection window, or a time domain length of the detection window. It can be understood that a signaling indication is signaling, sent by the network node to a terminal device, carrying the detection window information. The period of the detection window represents a repeated period of the detection window in time domain. The time domain offset of the detection window represents a time domain offset of a detection window relative to its previous detection window. The time domain length of the detection window represents a length of a single detection window in time domain.

Manner II: The position of the detection window corresponding to the first WUS is determined according to an agreement with the terminal device. It can be understood that the position of the detection window corresponding to the first WUS can be pre-agreed by the network node and the terminal device, and the terminal device performs detection of the first WUS according to the pre-agreed position of the detection window.

Manner III: It is determined, according to a predefined position and a position at which the first WUS is sent, the position of the detection window corresponding to the first WUS. It can be understood that a time domain position of the detection window may be predefined at the network node side. Here, the time domain position of the detection window refers to a start position of the detection window, and the position at which the first WUS is sent is used as an end position of the detection window.

At S220, the first WUS is sent to the terminal device in the detection window.

In a possible implementation, the sending the first WUS to the terminal device in the detection window includes: determining, in the detection window according to a pre-determined correspondence between a first preset index and a first time domain resource position, a target time domain position corresponding to the first preset index, and sending the first WUS at the target time domain position. It should be noted that the first preset index herein refers to an index corresponding to sending to the terminal device currently to be performed. In specific implementation, a corresponding first preset index may be configured for each terminal device in advance, or the first preset index is determined according to an SSB index, or the first preset index is determined according to a direction of a transmit beam. Then, a search on the corresponding first time domain resource position is performed according to the first preset index corresponding to the terminal device, to determine a target time domain resource position, so that the first WUS is sent at the target time domain resource position.

It can be understood that it can also be determined, in the embodiment of the present disclosure according to a sending condition of the first WUS, whether to send a second WUS. The method of the embodiment of the present disclosure further includes the following step S230.

At S230, sending of the second WUS is determined according to a preset rule.

By way of example, the preset rule may include any one or more of:
in a first case, in response to the first WUS indicating a first type of information, the second WUS needs to be sent, where the first type of information includes any one of wake-up indication information, or position information of the second WUS;
in a second case, in response to the first WUS sent to the terminal device indicating a second type of information, sending of the second WUS is skipped, where the second type of information includes any one of full wake-up indication information, system message change indication information, or measurement indication information;
in a third case, in response to determining, according to signaling, that the second WUS needs to be sent, the second WUS needs to be sent; or
in a fourth case, after the first WUS is sent to the terminal device, the second WUS needs to be sent.

It can be understood that, after it is determined according to the preset rule that detection of the second WUS needs to be performed, sending of the second WUS to the terminal device is performed. The sending of the second WUS specifically includes the following steps S231 and S232:
At S231, a second time domain position is determined.
At S232, the second WUS is sent to the terminal device at the second time domain position.

Here, the second time domain position may be determined in any of the following manners.
Manner I: the second time domain position according to a first time domain position and a first time domain offset;
Manner II: the second time domain position is determined according to the first time domain position, the first time domain offset, and a second group number;
Manner III: the second time domain position is determined according to the first time domain position, the first time domain offset, and a time domain position index; or
Manner IV: the second time domain position is determined according to position information, of the second WUS, carried by the first WUS, where the second time domain position is a time domain position at which the second WUS is located, or a time domain position at which the 1^{st} WUS in a plurality of WUSs corresponding to the second WUS is located, or a time domain position at which the last WUS in the plurality of WUSs corresponding to the second WUS is located.

In some embodiments, the first time domain position may be determined according to at least one of:
the first time domain position being a time domain position at which the first WUS is sent;
the first time domain position being a start position of the detection window corresponding to the first WUS;
the first time domain position being an end position of the detection window corresponding to the first WUS;
the first time domain position being a time domain position at which the 1^{st} WUS in a plurality of WUSs corresponding to the first WUS is located; or
the first time domain position being a time domain position at which the last WUS in the plurality of WUSs corresponding to the first WUS is located.

In some embodiments, the first time domain offset may be determined according to at least one of: signaling indication information, preset offset information, terminal device capability information, or subcarrier spacing information.

In some embodiments, the time domain position index may be determined according to an index of a second group in which the terminal device is located, or determined according to a preset correspondence between the time domain position index and a time domain resource position.

In some embodiments, the sending the second WUS to the terminal device at the second time domain position includes at least one of following steps S2321 and S2322:
At S2321, a second target frequency domain position corresponding to the second WUS is determined according to second information.
At S2322, a second sequence corresponding to the second WUS is determined according to the second information.
Here, the second information is determined by at least one of: a terminal device index, a second group index corresponding to the terminal device, a second group number, or a signaling indication.

In some embodiments, the sending the first WUS to a terminal device in the detection window further includes at least one of:
determining, according to first information, a first target frequency domain position corresponding to the first WUS; or
determining, according to the first information, a first sequence corresponding to the first WUS.

Here, the first information includes at least one of: a terminal device index, a first group index corresponding to the terminal device, a preset index, a first parameter, or a first group number.

In some embodiments, the sending method provided by the embodiment of the present disclosure further includes: in response to the first WUS indicating a third type of information, falling back, by the network node, to a conventional paging sending process, where the third type of information is one of a fallback indication or a measurement indication.

The scheme of the embodiment of the present disclosure will be described in detail below with specific examples. It should be noted that in the following specific examples, the network node being a base station and the terminal device being UE are examples for description.

### Example I:

Refer to FIG. 3, which presents a schematic diagram of WUS sending and detection provided by an embodiment of the present disclosure. In this example, a base station configures a period and a length of a detection window through signaling. A sequence corresponding to a first WUS sent by the base station is sequence A, and a sequence corresponding to a second WUS is sequence B. The base station sends the first WUS in the detection window and sends the second WUS at a second time domain position. The second time domain position is determined according to a first time domain position at which the first WUS is located and a first offset, where the first offset is configured through signaling, and the first time domain position is a position at which the first WUS is sent. A UE determines, according to first information, that the sequence corresponding to the first WUS is sequence A, and the UE determines, according to second information, that the sequence corresponding to the second WUS is sequence B.

In some embodiments, the UE determines the sequence corresponding to the first WUS according to a terminal device index and a first parameter. In an example, the UE determines the sequence corresponding to the first WUS according to floor (UE _ID/N) mod Ns, where UE_ID represents the terminal device index, and both N and Ns belong to the first parameter.

In some embodiments, the UE determines the sequence corresponding to the first WUS according to a terminal device index, a first parameter, and a first group number. In an example, the UE determines sequence A according to (floor (UE_ID/N) mod Ns) mod F, where UE_ID represents the terminal device index, both N and Ns belong to the first parameter, and F is the preset first group number.

In some embodiments, the UE determines the sequence corresponding to the first WUS according to a terminal device index and a first group number. In an example, the UE determines sequence A according to UE_ID mod F, where UE _ID represents the terminal device index, and F is the preset first group number.

In some embodiments, the UE determines sequence A corresponding to the first WUS according to a first group index, where the first group index corresponds to the UE.

In some embodiments, the UE determines sequence B corresponding to the second WUS according to a second group index, where the second group index corresponds to the UE.

In some embodiments, the UE determines the sequence corresponding to the second WUS according to a terminal device index corresponding to the terminal device and a second group number. In an example, the UE determines sequence B according to UE _ID mod M, where UE_ID represents the terminal device index, and M is the preset second group number.

The UE determines a position of the detection window according to the configured signaling, and detects the first WUS using sequence A at each time domain resource position from the detection window. When sequence A is detected (that is, the first WUS is detected) in the detection window, the UE stops detection in the detection window. The UE detects the second WUS using sequence B at the determined second time domain position, where the second time domain position is obtained by shifting the first time domain position by the first offset, and the first time domain position is a position at which the first WUS is detected. When sequence B is detected (that is, the second WUS is detected), the UE detects a PDCCH.

### Example II:

A base station configures a period position, a period, a time domain offset, and a time domain length of a detection window. A sequence corresponding to a first WUS sent by the base station is sequence A, and a sequence corresponding to a second WUS sent by the base station is sequence B. A frequency domain position at which the first WUS is sent is f1, and a frequency domain position at which the second WUS is sent is also f1. A second time domain position at which the second WUS is sent is determined according to a start position of the detection window and a first offset, where the first offset is determined by a terminal device capability and an offset set configured through signaling, and the first time domain position is a position at which the first WUS is sent.

A UE determines, according to first information, that the sequence corresponding to the first WUS is sequence A, and the UE determines, according to second information, that the sequence corresponding to the second WUS is sequence B.

The UE determines frequency domain positions corresponding to the first WUS/second WUS according to the first information; or, the UE determines the frequency domain positions corresponding to the first WUS/second WUS according to a first parameter, the first parameter being signaling configured by the base station; or the UE determines the frequency domain positions corresponding to the first WUS/second WUS according to a terminal device index and a first group number; or the UE determines the frequency domain positions corresponding to the first WUS/second WUS according to a corresponding first group index.

The UE determines a position of the detection window according to the signaling, detects, at the predetermined frequency domain position f1, the first WUS using sequence A at each time domain resource position from the detection window. If the first WUS is detected, the UE stops detection in the detection window. At the predetermined frequency domain position f1, the UE detects the second WUS using sequence B at the second time domain position, where the second time domain position is obtained by moving, by the first offset, a start position of the detection window in which the first WUS is located. If the second WUS is detected, the UE detects a PDCCH.

### Example III:

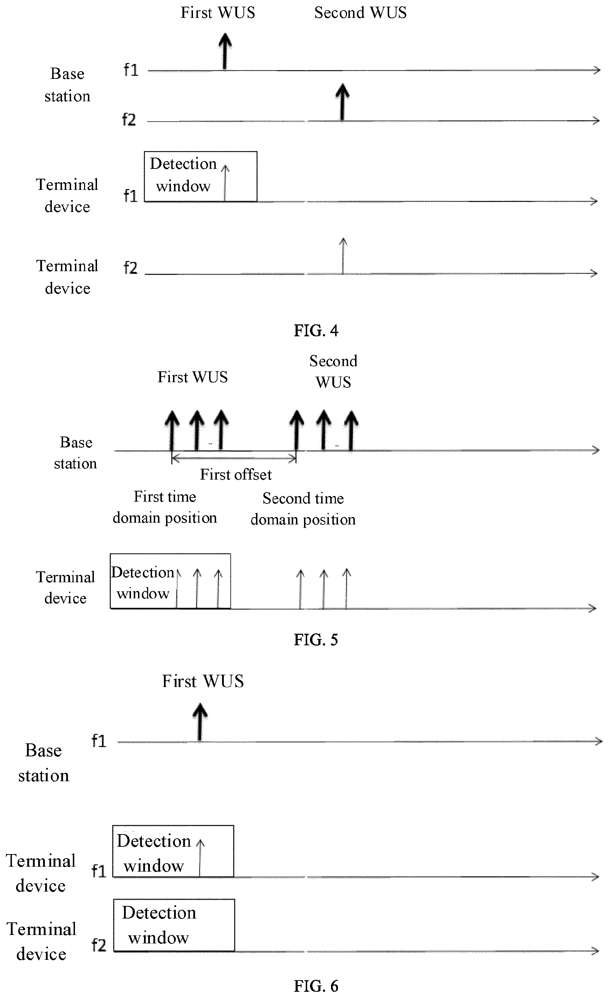

As shown in FIG. 4, a base station configures a period position, a period, a time domain offset, and a time domain length of a detection window. A sequence corresponding to a first WUS sent by the base station is sequence A, and a sequence corresponding to a second WUS is sequence B. A frequency domain position at which the first WUS is sent is f1, and a frequency domain position at which the second WUS is sent is f2. A second time domain position at which the second WUS is sent is determined according to a start position of the detection window and a first offset, where the first offset is determined by a UE according to a terminal device capability.

The UE determines, according to first information, that the sequence corresponding to the first WUS is sequence A, and the UE determines, according to second information, that the sequence corresponding to the second WUS is sequence B.

The UE determines, according to the first information, that the frequency domain position corresponding to the first WUS is f1, and the UE determines, according to the second information, that the frequency domain position corresponding to the second WUS is f2.

The UE determines a position of the detection window according to signaling, and detects, at the predetermined frequency domain position f1, the first WUS using sequence A at each time domain resource position from the detection window. If the first WUS is detected, the UE stops detection in the detection window. At the predetermined frequency domain position f2, the UE detects the second WUS using sequence B at the second time domain position, where the second time domain position is obtained by moving, by the first offset, a start position of the detection window in which the first WUS is located. If the second WUS is detected, the UE detects a PDCCH.

### Example IV:

As shown in FIG. 5, a base station configures a period and a length of a detection window through signaling. A sequence corresponding to a first WUS sent by the base station is sequence A, and the first WUS sent by the base station corresponds to x (x>1) WUS, each of which corresponds to one beam direction. A sequence corresponding to a second WUS is sequence B, and the second WUS corresponds to y (y>1) WUS, each of which corresponds to one beam direction. The base station sends the first WUS in the detection window and sends the second WUS at a second time domain position. The second time domain position is determined according to a first time domain position at which the first WUS is located and a first offset, where the first offset is configured through signaling. The first time domain position can be defined as a position at which the 1^{st} WUS in a plurality of first WUSs is located, and the second time domain position is defined as a position at which the 1^{st} WUS in a plurality of second WUSs is located.

The UE determines a position of the detection window according to the configured signaling, and detects the first WUS using sequence A at each time domain resource position from the detection window. If the first WUS is detected in the detection window, the UE stops detection in the detection window. The UE starts to detect the second WUS using sequence B at the determined second time domain position, and if the second WUS is detected, the UE detects a corresponding PDCCH. Here, the second time domain position is the position of the 1^{st} WUS in the plurality of WUSs corresponding to the second WUS, and the second time domain position is determined according to the first time domain position and the first offset.

### Example V:

A base station configures a period, a position, a time domain offset, and a time domain length of a detection window, and a sequence corresponding to a first WUS sent by the base station is sequence A1.

According to first information, a UE determines that sequences corresponding to the first WUS are sequence A and sequence A1.

Here, the base station and the UE pre-agree that a sequence corresponding to a full WUS is sequence A1; or the base station and the UE pre-agree that a sequence corresponding to a system change indication is sequence A1; or the base station and the UE pre-agree that a sequence corresponding to measurement indication information is sequence A1.

The UE determines the position of the detection window according to signaling, and detects the first WUS using sequence A and sequence A1 at each time domain resource position from the detection window. After the first WUS is detected, the UE stops detection in the detection window. Because it is detected by the UE that the sequence corresponding to the first WUS is sequence A1, the UE does not detect a second WUS, and directly detects a PDCCH.

### Example VI:

As shown in FIG. 6, a base station configures a position of a detection window, and configures a time domain period, a time domain offset, and a time domain length of the detection window, and the base station sends a first WUS at f1.

According to first information, a UE determines that frequency domain positions corresponding to the first WUS are f1 and f2.

Specifically, the base station and the terminal device pre-agree that a frequency domain position corresponding to a full WUS is f1; or the base station and the terminal device pre-agree that a frequency domain position corresponding to a system change indication is f1; or the base station and the terminal device pre-agree that a frequency domain position corresponding to measurement indication information is f1.

The UE determines the position of the detection window according to signaling, and detects the first WUS at f1 and f2 at each time domain resource position from the detection window. When the first WUS is detected by the UE at f1, the UE stops detection in the detection window. Because it is detected that the frequency domain position corresponding to the first WUS is f1, the UE does not detect a second WUS and directly detects a PDCCH.

### Example VII:

A base station configures a period, a time domain offset, and a time domain length of a detection window. A sequence corresponding to a first WUS sent by the base station is sequence A2, and a sequence corresponding to a second WUS is sequence B. A second time domain position is determined according to a start position of the detection window and a first offset, where a terminal device determines the first offset according to signaling, and the second time domain position is a position at which the second WUS is located.

According to first information, the terminal device determines that sequences corresponding to the first WUS are sequence A and sequence A2, and according to second information, the terminal device determines that the sequence corresponding to the second WUS is sequence B.

In some embodiments, the base station and the terminal device pre-agree that a sequence corresponding to wake-up indication information is sequence A2.

The UE determines a position of the detection window according to the signaling, and detects the first WUS using sequence A and sequence A2 at each time domain resource position from the detection window. If the first WUS is detected, the UE stops detection in the detection window. Because the wake-up indication information is detected, the UE detects the second WUS using sequence B at the second time domain position. If the second WUS is detected, the terminal device detects a PDCCH. Here, the second time domain position is determined by the UE according to a start position of the detection window and the first offset.

### Example VIII:

A base station and a terminal device pre-agree on a position of a detection window. The base station sends a first WUS in the detection window, and a corresponding sequence during sending is sequence A. A sequence corresponding to the base station sending a second WUS is sequence B. A second time domain position at which the second WUS is sent is determined according to an end position of the detection window and a first offset, where the first offset is determined according to signaling, and the second time domain position is a position at which the second WUS is located.

The UE determines, according to first information, that a sequence corresponding to the first WUS is sequence A, and the UE determines, according to second information, that a sequence corresponding to the second WUS is sequence B. The UE detects, in the pre-agreed detection window, the first WUS using sequence A at each time domain resource position from the detection window. If the first WUS is detected, the UE stops detection in the detection window. The UE starts to detect the second WUS using sequence B from the second time domain position. After the second WUS is detected, the terminal device detects a corresponding PDCCH. Here, the second time domain position is determined according to the end position of the detection window and the first offset.

### Example IX:

A base station configures a period of T and a time domain length of L for a detection window. A sequence corresponding to a first WUS sent by the base station is sequence A, and a sequence corresponding to a second WUS is sequence B. A second time domain position corresponding to the second WUS is determined according to an end position of the detection window, a first offset, and a second group number, where the first offset is configured through signaling.

The UE determines, according to first information, that the sequence corresponding to the first WUS is sequence A, and the UE determines, according to second information, that the sequence corresponding to the second WUS is sequence B. The UE determines a position of the detection window according to the signaling, and detects the first WUS using sequence A at each time domain resource position from the detection window. If the first WUS is detected, the UE stops detection in the detection window. The UE starts to detect the second WUS using sequence B from the second time domain position. After the second WUS is detected, the terminal device detects a PDCCH. The UE determines the second time domain position according to the end position of the detection window, the first offset, and the second group number.

### Example X:

A sequence corresponding to a first WUS sent by a base station in a detection window is sequence A, and a sequence corresponding to a second WUS is sequence B. A second time domain position at which the second WUS is sent is determined according to an end position of the detection window, a first offset, and a second group number, where the first offset is configured through signaling.

A UE determines, according to first information, that the sequence corresponding to the first WUS is sequence A, and the UE determines, according to second information, that the sequence corresponding to the second WUS is sequence B.

The UE determines a position of the detection window according to signaling which exists when the base station configures a DRX cycle, where "on" in the DRX cycle corresponds to the position of the detection window; and detects the first WUS using sequence A at each time domain resource position from the detection window. If the first WUS is detected, the UE stops detection in the detection window. The UE starts to detect the second WUS using sequence B from the second time domain position. After the second WUS is detected, the terminal device detects a PDCCH. Here, the UE determines the second time domain position according to a start position of the detection window, the first offset, and the second group number.

### Example XI:

A sequence corresponding to a first WUS sent by a base station in a detection window is sequence A, and a sequence corresponding to a second WUS is sequence B. A second time domain position is determined according to an end position of the detection window, a first offset, and a second group number, where the first offset is configured through signaling.

A UE determines, according to first information, that the sequence corresponding to the first WUS is sequence A, and the UE determines, according to second information, that the sequence corresponding to the second WUS is sequence B.

The UE determines a position of the detection window according to signaling which exists when the base station configures a DRX cycle, where "on" in the DRX cycle is the position of the detection window; and detects the first WUS using sequence A at each time domain resource position from the detection window. If the first WUS is detected, the UE stops detection in the detection window. The UE starts to detect the second WUS using sequence B from the second time domain position. After the second WUS is detected, the terminal device detects a PDCCH. The UE determines the second time domain position according to the end position of the detection window, the first offset, and the second group number.

### Example XII:

A base station configures a position of a detection window. A sequence corresponding to a first WUS sent by the base station is sequence A, and a sequence corresponding to a second WUS is sequence B. A frequency domain position at which the first WUS is sent is f1, and a frequency domain position at which the second WUS is sent is f2. A second time domain position is determined according to an end position of the detection window and a first offset, where the first offset is configured through signaling.

A UE determines, according to first information, that the sequence corresponding to the first WUS is sequence A, and the UE determines, according to second information, that the sequence corresponding to the second WUS is sequence B.

The UE determines, according to the first information, that the frequency domain position corresponding to the first WUS is f1, and the UE determines, according to the second information, that the frequency domain position corresponding to the second WUS is f2.

The UE determines the position of the detection window according to the signaling, and detects, at the frequency domain position f1, the first WUS using sequence A at each time domain resource position from the detection window. If the first WUS is detected, the UE stops detection in the detection window. If the second WUS is not detected by the UE at the frequency domain position f2 or at the second time domain position, the UE does not detect a PDCCH. Here, the UE determines the second time domain position according to the end position of the detection window and the first offset.

### Example XIII:

A base station configures a position of a detection window through signaling. A sequence corresponding to a first WUS sent by the base station is sequence A, and a sequence corresponding to a second WUS is sequence B. A second time domain position is determined according to an end position of the detection window and a first offset, where the first offset is configured through signaling.

A UE determines, according to first information, that the sequence corresponding to the first WUS is sequence A, and the UE determines, according to second information, that the sequence corresponding to the second WUS is sequence B1.

The UE determines the position of the detection window according to the signaling, and detects the first WUS using sequence A at each time domain resource position from the detection window. If the first WUS is detected, the UE stops detection in the detection window. The UE starts to detect the second WUS using sequence B1 at the second time domain position. If the second WUS is not detected, the UE does not detect a PDCCH. Here, the UE determines the second time domain position according to the end position of the detection window and the first offset.

### Example XIV:

A base station configures a position of a detection window through signaling. A sequence corresponding to a first WUS sent by the base station is sequence A.

A UE determines, according to first information, that the sequence corresponding to the first WUS is sequence A, and the UE determines, according to second information, that a sequence corresponding to a second WUS is sequence B.

The UE determines the position of the detection window according to the signaling, and detects the first WUS using sequence A at each time domain resource position from the detection window. If the first WUS is detected, the UE stops detection in the detection window. The UE starts to detect the second WUS using sequence B at a second time domain position, where the second time domain position is a position shifted by a second offset from an end position of the detection window, and the second offset is at least determined according to a second group number and the signaling. If the second WUS is not detected by the UE at the second time domain position, the UE does not detect a PDCCH.

### Example XV:

A base station configures a period of T and a length of L for a detection window through signaling.

A UE determines, according to first information, that a sequence corresponding to a first WUS is sequence A, and the UE determines, according to second information, that a sequence corresponding to a second WUS is sequence B.

The UE determines a position of the detection window according to the signaling, and detects the first WUS using sequence A at each time domain resource position from the detection window. If the first WUS is still not detected at the end of the detection window, the UE does not detect the second WUS and does not detect a PDCCH.

### Example XVI:

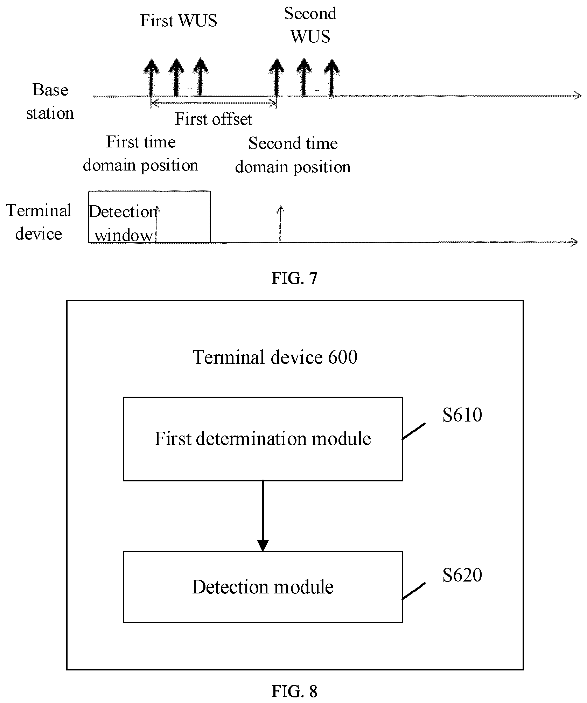

As shown in FIG. 7, a base station configures a period and a length of a detection window through signaling. A sequence corresponding to a first WUS sent by the base station is sequence

A. The first WUS sent by the base station corresponds to x WUSs, each of which corresponds to one beam direction. A sequence corresponding to a second WUS is sequence B, and the second WUS corresponds to y WUSs, each of which corresponds to one beam direction. The base station sends the first WUS in the detection window and sends the second WUS at a second time domain position. The second time domain position is determined according to a first time domain position at which the first WUS is located and a first offset, where the first offset is configured through signaling. It is assumed that the first time domain position is a position at which the 1^{st} WUS in a plurality of first WUSs is located, and the second time domain position is a position at which the 1^{st} WUS in a plurality of second WUSs is located.

A UE determines a position of the detection window according to the configured signaling. The UE determines a time domain resource position for detection in the detection window according to a first preset index. Specifically, the UE determines a target time domain resource position in the detection window according to the first preset index and a first time domain resource position; and detects the first WUS using sequence A at the target time domain resource position. If the first WUS is detected in the detection window, the UE stops detection in the detection window. The UE starts to detect the second WUS using sequence B after determining the second time domain position. After the second WUS is detected, the terminal device detects a corresponding PDCCH. Here, the second time domain position is the position of the 1^{st} WUS in a plurality of WUSs corresponding to the second WUS, and the second time domain position is determined according to the first time domain position and the first offset. The first preset index is determined according to an SSB index.

### Example XVII:

A base station configures a period of T and a time domain length of L for a detection window. A first WUS sent by the base station is in a form of sequence, corresponding to sequence A. A second WUS is in a form of control information, that is, in a form of a sequence of X bits, where each bit corresponds to a group of wake-up information, with the following meaning: a value of 1 means wake-up, and a value of 0 means non-wake-up. A second time domain position is determined according to an end position of the detection window, a first offset, and a second group number, where the first offset is configured through signaling.

A UE determines, according to first information, that a sequence corresponding to the first WUS is sequence A, and the UE determines, according to second information the x^{th} bit of an x-bit sequence corresponding to the second WUS.

The UE determines a position of the detection window according to the signaling, and detects the first WUS using sequence A at each time domain resource position from the detection window. If the first WUS is detected, the UE stops detection in the detection window. The UE starts to detect the second WUS at the second time domain position, and obtains a value of 1 corresponding to the second WUS. The terminal device detects a corresponding PDCCH. The UE determines the second time domain position according to the end position of the detection window, the first offset, and the second group number.

### Example XVIII:

The base station configures a period of T and a time domain length of L for a detection window through signaling, where the signaling is configured specifically for a terminal device, that is, the base station configures the period and the time domain length of the detection window for each terminal device.

A UE determines, according to first information, that a sequence corresponding to a first WUS is sequence A, and the UE determines, according to second information, that a sequence corresponding to a second WUS is sequence B.

The UE determines a position of the detection window according to the signaling, and detects the first WUS using sequence A at each time domain resource position from the detection window. If the first WUS is not detected, the UE does not detect a PDCCH.

### Example XIX:

A base station configures a period of T and a length of L for a detection window through signaling. The signaling is configured specifically for a terminal device, that is, the base station configures the period and the length of the detection window for each terminal device.

A UE determines, according to first information, that a sequence corresponding to a first WUS is sequence A, and the UE determines, according to second information, that a sequence corresponding to a second WUS is sequence B.

The UE determines a position of the detection window according to the signaling, and detects the first WUS using sequence A at each time domain resource position from the detection window. If the first WUS is detected, the UE detects the second WUS. If the second WUS is detected, the UE detects a PDCCH.

### Example XX:

A base station configures a period of T and a time domain length of L for a detection window through signaling. The signaling is configured specifically for a cell. A UE determines, according to first information, that a sequence corresponding to a first WUS is sequence A, and the UE determines, according to second information, that a sequence corresponding to a second WUS is sequence B.

The UE determines a position of the detection window according to the signaling, and detects the first WUS using sequence A at each time domain resource position from the detection window. If the first WUS is detected, the UE detects the second WUS. If the second WUS is detected, the UE detects a PDCCH.

### Example XXI:

A base station configures a period of T and a length of L for a detection window through signaling. The signaling is configured based on a third value, that is, a UE with the same corresponding same third value has the same detection window. The UE determines the third value according to at least one of a terminal device index, a preset value, or the signaling.

The UE determines, according to first information, that a sequence corresponding to a first WUS is sequence A, and the UE determines, according to second information, that a sequence corresponding to a second WUS is sequence B.

The UE determines a position of the detection window according to the signaling, and detects the first WUS using sequence A at each time domain resource position from the detection window. If the first WUS is detected, the UE detects the second WUS. If the second WUS is detected, the UE detects a PDCCH.

### Example XXII:

A base station determines a start position of a detection window according to a predefined time domain position, and determines a position at which a first WUS is sent as an end position of the detection window. A sequence corresponding to the first WUS sent by the base station is sequence A, and a sequence corresponding to a sent second WUS is sequence B. A second time domain position is determined according to a first position at which the first WUS is located and a first offset, where the first offset is configured through signaling. It is assumed that the first position is the end position of the detection window, that is, the position at which the first WUS is located.

A UE determines, according to first information, that the sequence corresponding to the first WUS is sequence A, and the UE determines, according to second information, that the sequence corresponding to the second WUS is sequence B.

The UE determines a position of the detection window according to a predefined time domain position, and detects the first WUS using sequence A at each time domain resource position from the detection window. If the first WUS is detected, the position of the first WUS is determined as the end position of the detection window. The UE determines the second time domain position corresponding to the second WUS according to the end position of the detection window and the first offset, and the UE detects the second WUS. If the second WUS is detected, the UE detects a PDCCH.

### Example XXIII:

After a PDCCH is detected, a PDSCH corresponding to the detected PDCCH is searched for a paging message corresponding to the detected PDCCH.

In response to no paging message corresponding to the detected PDCCH being found, a terminal device performs a channel measurement, and determines, according to a measurement result, whether to fall back to a conventional paging detection process, or determines, according to the measurement result, whether to continue the WUS detection. The conventional paging detection process is one of the following: the terminal device does not determine detection of the PDCCH corresponding to paging according to a detection result of the WUS; the terminal device directly detects the PDCCH corresponding to the paging; or a host of the terminal device is continuously in an active state within a preset duration.

### Example XXIV:

In the above examples, in response to a first WUS detected by a terminal device indicating a third type of information, the terminal device falls back to a conventional paging detection process, where the third type of information is one of a fallback indication or a measurement indication. The conventional paging detection process is one of the following: the terminal device does not determine detection of a PDCCH corresponding to paging according to a detection result of the WUS; the terminal device directly detects the PDCCH corresponding to the paging; or a host of the terminal device is continuously in an active state within a preset duration.

As shown in FIG. 8, a further embodiment of the present disclosure provides a terminal device 600, including:
a first determination module 610 configured to determine a detection window corresponding to a first WUS; and
a detection module 620 configured to detect, in the detection window, the first WUS sent by a network node.

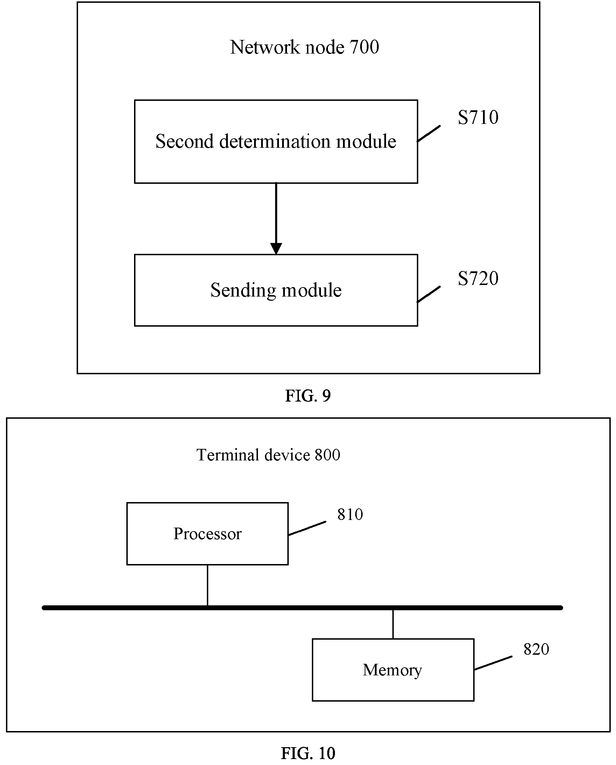

As shown in FIG. 9, an embodiment of the present disclosure provides a network node 700, including:
a second determination module 710 configured to determine a detection window corresponding to a first WUS; and
a sending module 720 configured to send the first WUS to a terminal device in the detection window.

A further embodiment of the present disclosure provides a terminal device. As shown in FIG. 10, the terminal device 800 includes, but is not limited to:
a processor 810 and a memory 820.

The memory 820 stores program instructions which, when executed by the processor 810, cause the processor 810 to perform the WUS receiving method as described in any of the above embodiments.

The processor 810 and the memory 820 above may be connected by a bus or by other means.

It will be understood that the processor 810 may employ a central processing unit (CPU). The processor may also be a general-purpose processor, a digital signal processor (DSP), an application-specific integrated circuit (ASIC), a field programmable gate array (FPGA) or other programmable logic devices, discrete gate or transistor logic devices, discrete hardware components, etc. The general-purpose processor may be a microprocessor or the processor may be any conventional processor. Alternatively, the processor 810 uses one or more integrated circuits, and is configured to execute a related program to implement a technical scheme provided in the embodiments of the present disclosure.

As a non-transitory computer-readable storage medium, the memory 820 may be configured to store a non-transitory software program and a non-transitory computer-executable program, for example, the WUS receiving method described in any of the embodiments of the present disclosure. The processor 810 implements the WUS receiving method described above by running a non-transitory software program and instructions stored in the memory 820.

The memory 820 may include a program storage area and a data storage area, where the program storage area may store an operating system and application program(s) required by at least one feature, and the data storage area may store the data required to perform the WUS receiving method described above or a method for training a spectrum sensing model. In addition, the memory 820 may include a high-speed random access memory and a non-transitory memory, for example, at least one magnetic disk storage device, a flash memory device, or another non-transitory solid-state storage device. In some implementations, the memory 820 may optionally include memories remotely disposed with respect to the processor 810, and these remote memories may be connected to the processor 810 via a network. Examples of the above-mentioned network include, but are not limited to, the Internet, an intranet, a local area network, a mobile communications network, and a combination thereof.

The non-transitory software program and the instructions required to implement the WUS receiving method described above are stored in the memory 820, and when executed by at least one processor 810, cause the at least one processor to perform the WUS receiving method according to any of the embodiments of the present disclosure.

A further embodiment of the present disclosure provides a network node. As shown in FIG. 16, the network node 900 includes, but is not limited to:
a processor 910 and a memory 920.

The memory 920 stores program instructions which, when executed by the processor 910, cause the processor 910 to perform the WUS sending method as described in any of the above embodiments.

The processor 910 and the memory 920 above may be connected by a bus or by other means.

It will be understood that the processor 910 may employ a central processing unit (CPU). The processor may also be a general-purpose processor, a digital signal processor (DSP), an application-specific integrated circuit (ASIC), a field programmable gate array (FPGA) or other programmable logic devices, discrete gate or transistor logic devices, discrete hardware components, etc. The general-purpose processor may be a microprocessor or the processor may be any conventional processor. Alternatively, the processor 910 uses one or more integrated circuits, and is configured to execute a related program to implement a technical scheme provided in the embodiments of the present disclosure.

As a non-transitory computer-readable storage medium, the memory 920 may be configured to store a non-transitory software program and a non-transitory computer-executable program, for example, the WUS sending method described in any of the embodiments of the present disclosure. The processor 910 implements the WUS sending method described above by running a non-transitory software program and instructions stored in the memory 920.

The memory 920 may include a program storage area and a data storage area, where the program storage area may store an operating system and application program(s) required by at least one feature, and the data storage area may store the data required to perform the WUS sending method described above or a method for training a spectrum sensing model. In addition, the memory 920 may include a high-speed random access memory and a non-transitory memory, for example, at least one magnetic disk storage device, a flash memory device, or another non-transitory solid-state storage device. In some implementations, the memory 920 may optionally include memories remotely disposed with respect to the processor 910, and these remote memories may be connected to the processor 910 via a network. Examples of the above-mentioned network include, but are not limited to, the Internet, an intranet, a local area network, a mobile communications network, and a combination thereof.

The non-transitory software program and the instructions required to implement the WUS sending method described above are stored in the memory 920, and when executed by at least one processor 910, cause the at least one processor to perform the WUS sending method according to any of the embodiments of the present disclosure.

A further embodiment of the present disclosure provides a computer-readable storage medium storing program instructions which, when executed by a computer, cause the computer to implement the WUS sending method as described in any of the above embodiments.

The computer storage medium of this embodiment of the present disclosure may be any combination of one or more computer-readable media. The computer-readable medium may be a computer-readable signal medium or a computer-readable storage medium. For example, the computer-readable storage medium may be, but is not limited to, an electric, magnetic, optical, electromagnetic, infrared, or semiconductor system, apparatus, or device, or any combination thereof. More specific examples (a non-exhaustive list) of the computer-readable storage medium include: an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Herein, the computer-readable storage medium may be any tangible medium including or storing a program, and the program may be used by or used in combination with an instruction execution system, apparatus or device.

The computer-readable signal medium may include a data signal propagated in a baseband or propagated as a part of a carrier, and carry computer-readable program code. Such a propagated signal may take any of a variety of forms, including, but not limited to, an electro-magnetic signal, an optical signal, or any suitable combination thereof. The computer-readable signal medium may alternatively be any computer-readable storage medium other than the computer-readable medium. The computer-readable storage medium may send, propagate or transmit a program used by or used in combination with an instruction execution system, apparatus or device.

Program code embodied on a computer-readable medium may be transmitted using any appropriate medium, including but not limited to wireless, wireline, optical fiber cable, RF, etc., or any suitable combination of the foregoing.

Computer program code for executing the operations in the present disclosure may be compiled by using one or more program design languages or a combination thereof. The programming languages include object-oriented programming languages, such as Java, Smalltalk, and C++, and conventional procedural programming languages, such as C or similar programming languages. The program code may be executed fully on a user computer, executed partially on a user computer, executed as an independent software package, executed partially on a user computer and partially on a remote computer, or executed fully on a remote computer or a server. In the latter scenario involving a remote computer, the remote computer may be connected to the user computer through any type of network, including a local area network (LAN) or a wide area network (WAN), or the connection may be made to an external computer (for example, through the Internet using an Internet Service Provider).

It should be noted that although the operations are described in a particular order in the drawings in the embodiments of the present disclosure, it should not be understood as requiring that these operations be performed in the particular order shown or in a serial order, or that all of the operations shown be performed to obtain a desired result. In a certain environment, multitasking and parallel processing may be advantageous.

In addition, in the embodiments of the present disclosure, the description of the embodiments has respective focuses. For a part that is not described in detail or recorded in an embodiment, refer to related descriptions in other embodiments.

The above is a detailed description of some embodiments of the present disclosure. However, the present disclosure is not limited to the above-mentioned embodiments. Those of ordinary skill in the art can also make various equivalent modifications or replacements without departing from the range of the present disclosure.

## Claims

1. A Wake-Up Signal, WUS, receiving method, applied to a terminal device, the method comprising:
determining a detection window corresponding to a first WUS (S110);
detecting, in the detection window, the first WUS sent by a network node (S120);
detecting a Physical Downlink Control Channel, PDCCH, in response to the detected first WUS indicating a second type of information, wherein the second type of information is used to represent at least one of full wake-up indication information, system message change indication information, or measurement indication information; or skipping detection of the PDCCH in response to the first WUS being undetected; and
searching a Physical Downlink Shared Channel, PDSCH, corresponding to the detected PDCCH for a paging message corresponding to the detected PDCCH; and
in response to no paging message corresponding to the detected PDCCH being found, performing a channel measurement, and determining, according to a measurement result, whether to fall back to a conventional paging detection process, or determining, according to the measurement result, whether to continue the WUS detection.

2. The method of claim 1, further comprising:
detecting a second WUS sent by the network node according to an indication of a preset rule determining, according to a preset rule, that detection of a second WUS needs to be performed, and detecting the second WUS sent by the network node.

3. The method of claim 2, wherein the preset rule comprises at least one of the following:
in response to the detected first WUS indicating a first type of information, detection of the second WUS is needed, wherein the first type of information comprises wake-up indication information or second WUS position information;
in response to the detected first WUS indicating a second type of information, detection of the second WUS is skipped, wherein the second type of information comprises any one of full wake-up indication information, system message change indication information, or measurement indication information;
in response to the first WUS being detected, detection of the second WUS is needed;
in response to the first WUS being undetected, detection of the second WUS is skipped; or
in response to signaling which indicates detection of the second WUS being received, detection of the second WUS is needed.

4. The method of claim 2, wherein the detecting the second WUS sent by the network node comprises:
determining a second time domain position; and
detecting, at the second time domain position, the second WUS sent by the network node.

5. The method of claim 4, wherein the determining a second time domain position comprises one of:
determining the second time domain position according to a first time domain position and a first time domain offset;
determining the second time domain position according to the first time domain position, the first time domain offset, and a second group number;
determining the second time domain position according to the first time domain position, the first time domain offset, and a time domain position index; or
determining the second time domain position according to the second WUS position information carried by the first WUS,
wherein the second time domain position is a time domain position at which the second WUS is located, or a time domain position at which the 1^{st} WUS in a plurality of first WUSs which corresponds to the second WUS is located, or a time domain position at which the last WUS in the plurality of first WUSs which corresponds to the second WUS is located.

6. The method of claim 5, wherein the first time domain position is determined according to at least one of:
the first time domain position being a time domain position at which the first WUS is detected;
the first time domain position being a start position of the detection window corresponding to the first WUS;
the first time domain position being an end position of the detection window corresponding to the first WUS;
the first time domain position being a time domain position at which the 1^{st} WUS in a plurality of WUSs corresponding to the first WUS is located; or
the first time domain position being a time domain position at which the last WUS in the plurality of WUSs corresponding to the first WUS is located.

7. The method of claim 5, wherein the first time domain offset is determined according to at least one of: signaling indication information, preset offset information, terminal device capability information, or subcarrier spacing information.

8. The method of claim 5, wherein the time domain position index is determined according to an index of a second group in which the terminal device is located, or determined according to a preset correspondence between the time domain position index and a time domain resource position.

9. The method of claim 4, wherein detecting, at the second time domain position, the second WUS sent by the network node comprises:
determining, according to second information, a second target frequency domain position corresponding to the second WUS; and
determining, according to the second information, a second sequence corresponding to the second WUS,
wherein the second information is determined by at least one of: a terminal device index, a second group index corresponding to the terminal device, a second group number, or a signaling indication.

10. The method of claim 1, wherein a position of the detection window corresponding to the first WUS is determined by one of:
determining, according to detection window information indicated by signaling, the position of the detection window corresponding to the first WUS, wherein the detection window information comprises at least one of: a period of the detection window, a time domain offset of the detection window, or a time domain length of the detection window;
determining, according to an agreement with the network node, the position of the detection window corresponding to the first WUS; or
determining, according to a predefined time domain position and a position at which the first WUS is detected, the position of the detection window corresponding to the first WUS.

11. A Wake-Up Signal, WUS, sending method, applied to a network node, the method comprising:
determining a detection window corresponding to a first WUS (S210); and
sending the first WUS to a terminal device in the detection window (S220);
wherein the first WUS indicates a second type of information comprising any one of full wake-up indication information, system message change indication information, or measurement indication information, such that the terminal device detects a Physical Downlink Control Channel, PDCCH, searches a Physical Downlink Shared Channel, PDSCH, corresponding to the detected PDCCH for a paging message corresponding to the detected PDCCH, in response to no paging message corresponding to the detected PDCCH being found, perform a channel measurement, and determine, according to a measurement result, whether to fall back to a conventional paging detection process, or determine, according to the measurement result, whether to continue the WUS detection.

12. A terminal device, comprising a processor and a memory, wherein the memory stores program instructions which, when executed by the processor, cause the processor to perform the Wake-Up Signal, WUS, receiving method of any one of claims 1 to 10.

13. A system configured to perform the Wake-Up Signal, WUS, sending method of claim 11.

14. A computer-readable storage medium storing program instructions, which when executed by a computer, cause the computer to implement the wake-up signal (WUS) receiving method of any one of claims 1 to 10.

15. A computer-readable storage medium storing program instructions, which when executed by a system, cause the system to implement the wake-up signal (WUS) sending method of claim 11.

## Patentansprüche

1. Aufwecksignal (WUS)-Empfangsverfahren, das auf ein Endgerät angewendet wird, wobei das Verfahren umfasst:
Bestimmen eines Erkennungsfensters, das einem ersten WUS entspricht (S110); Erkennen des ersten WUS, das von einem Netzwerkknoten gesendet wird, in dem Erkennungsfenster (S120);
Erkennen eines physikalischen Downlink-Steuerkanals (PDCCH, Physical Downlink Control Channel) als Reaktion auf das erkannte erste WUS, das einen zweiten Informationstyp anzeigt, wobei der zweite Informationstyp verwendet wird, um mindestens eine von einer vollständigen Aufweckanzeigeinformation, Systemnachrichtenänderungsanzeigeinformation oder Messanzeigeinformation darzustellen; oder Überspringen der Erkennung des PDCCH als Reaktion darauf, dass das erste WUS nicht erkannt wurde; und
Durchsuchen eines gemeinsam genutzten physikalischen Downlink-Kanals (PDSCH, Physical Downlink Shared Channel), der dem erkannten PDCCH entspricht, nach einer Paging-Nachricht, die dem erkannten PDCCH entspricht; und
als Reaktion darauf, dass keine Paging-Nachricht gefunden wurde, die dem erkannten PDCCH entspricht, Durchführen einer Kanalmessung und Bestimmen anhand eines Messergebnisses, ob auf einen herkömmlichen Paging-Erkennungsprozess zurückgegriffen werden soll, oder Bestimmen anhand des Messergebnisses, ob die WUS-Erkennung fortgesetzt werden soll.

2. Verfahren nach Anspruch 1, ferner umfassend:
Erkennen eines zweiten WUS, das von dem Netzwerkknoten gemäß einer Anzeige einer voreingestellten Regel gesendet wird, Bestimmen gemäß einer voreingestellten Regel, dass die Erkennung eines zweiten WUS durchgeführt werden muss, und Erkennen des von dem Netzwerkknoten gesendeten zweiten WUS.

3. Verfahren nach Anspruch 2, wobei die voreingestellte Regel mindestens eines von Folgendem umfasst:
als Reaktion auf das erkannte erste WUS, das einen ersten Informationstyp anzeigt, ist die Erkennung des zweiten WUS erforderlich, wobei der erste Informationstyp eine Aufweckanzeigeinformation oder eine zweite WUS-Positionsinformation umfasst;
als Reaktion auf das erkannte erste WUS, das einen zweiten Informationstyp anzeigt, wird die Erkennung des zweiten WUS übersprungen, wobei der zweite Informationstyp eine von einer vollständigen Aufweckanzeigeinformation, Systemnachrichtenänderungsanzeigeinformation oder Messanzeigeinformation umfasst;
als Reaktion auf das Erkennen des ersten WUS ist die Erkennung des zweiten WUS erforderlich;
als Reaktion darauf, dass das erste WUS nicht erkannt wurde, wird die Erkennung des zweiten WUS übersprungen; oder
als Reaktion auf ein Signal, das anzeigt, dass die Erkennung des zweiten WUS empfangen wurde, ist die Erkennung des zweiten WUS erforderlich.

4. Verfahren nach Anspruch 2, wobei das Erkennen des von dem Netzwerkknoten gesendeten zweiten WUS umfasst:
Bestimmen einer zweiten Zeitbereichsposition; und
Erkennen des von dem Netzwerkknoten gesendeten zweiten WUS an der zweiten Zeitbereichsposition.

5. Verfahren nach Anspruch 4, wobei das Bestimmen einer zweiten Zeitbereichsposition eines von Folgendem umfasst:
Bestimmen der zweiten Zeitbereichsposition gemäß einer ersten Zeitbereichsposition und einer ersten Zeitbereichsverschiebung;
Bestimmen der zweiten Zeitbereichsposition gemäß der ersten Zeitbereichsposition, der ersten Zeitbereichsverschiebung und einer zweiten Gruppennummer;
Bestimmen der zweiten Zeitbereichsposition gemäß der ersten Zeitbereichsposition, der ersten Zeitbereichsverschiebung und einem Zeitbereichspositionsindex; oder
Bestimmen der zweiten Zeitbereichsposition gemäß der zweiten WUS-Positionsinformation, die von dem ersten WUS übertragen wird,
wobei die zweite Zeitbereichsposition eine Zeitbereichsposition ist, an der sich das zweite WUS befindet, oder eine Zeitbereichsposition, an der sich das 1. WUS in einer Vielzahl von ersten WUS befindet, die dem zweiten WUS entspricht, oder eine Zeitbereichsposition, an der sich das letzte WUS in der Vielzahl von ersten WUS befindet, die dem zweiten WUS entspricht.

6. Verfahren nach Anspruch 5, wobei die erste Zeitbereichsposition gemäß mindestens einem von Folgendem bestimmt wird:
die erste Zeitbereichsposition ist eine Zeitbereichsposition, an der das erste WUS erkannt wird;
die erste Zeitbereichsposition ist eine Startposition des Erkennungsfensters, das dem ersten WUS entspricht;
die erste Zeitbereichsposition ist eine Endposition des Erkennungsfensters, das dem ersten WUS entspricht;
die erste Zeitbereichsposition ist eine Zeitbereichsposition, an der sich das 1. WUS in einer Vielzahl von WUS befindet, die dem ersten WUS entsprechen; oder die erste Zeitbereichsposition ist eine Zeitbereichsposition, an der sich das letzte WUS in der Vielzahl von WUS befindet, die dem ersten WUS entsprechen.

7. Verfahren nach Anspruch 5, wobei die erste Zeitbereichsverschiebung gemäß mindestens einem von Folgendem bestimmt wird: einer Signalisierungsanzeigeinformation, einer voreingestellten Verschiebungsinformation, einer Endgerätefähigkeitsinformation oder einer Unterträgerabstandsinformation.

8. Verfahren nach Anspruch 5, wobei der Zeitbereichspositionsindex gemäß einem Index einer zweiten Gruppe, in der sich das Endgerät befindet, bestimmt wird oder gemäß einer voreingestellten Übereinstimmung zwischen dem Zeitbereichspositionsindex und einer Zeitbereichsressourcenposition bestimmt wird.

9. Verfahren nach Anspruch 4, wobei das Erkennen des von dem Netzwerkknoten gesendeten zweiten WUS an der zweiten Zeitbereichsposition umfasst:
Bestimmen einer zweiten Zielfrequenzbereichsposition, die dem zweiten WUS entspricht, gemäß einer zweiten Information; und
Bestimmen einer zweiten Sequenz, die dem zweiten WUS entspricht, gemäß der zweiten Information,
wobei die zweite Information durch mindestens eines von Folgendem bestimmt wird: einem Endgeräteindex, einem zweiten Gruppenindex, der dem Endgerät entspricht, einer zweiten Gruppennummer oder einer Signalisierungsanzeige.

10. Verfahren nach Anspruch 1, wobei eine Position des Erkennungsfensters, das dem ersten WUS entspricht, durch eines von Folgendem bestimmt wird:
Bestimmen der Position des Erkennungsfensters, das dem ersten WUS entspricht, gemäß der durch Signalisierung angezeigten Erkennungsfensterinformation, wobei die Erkennungsfensterinformation mindestens eines von Folgendem umfasst: eine Periode des Erkennungsfenster, eine Zeitbereichsverschiebung des Erkennungsfensters oder eine Zeitbereichslänge des Erkennungsfensters;
Bestimmen der Position des Erkennungsfensters, das dem ersten WUS entspricht, gemäß einer Übereinstimmung mit dem Netzwerkknoten; oder
Bestimmen der Position des Erkennungsfensters, das dem ersten WUS entspricht, gemäß einer vordefinierten Zeitbereichsposition und einer Position, an der das erste WUS erkannt wird.

11. Aufwecksignal (WUS)-Sendeverfahren, das auf einen Netzwerkknoten angewendet wird, wobei das Verfahren umfasst:
Bestimmen eines Erkennungsfensters, das einem ersten WUS entspricht (S210); und
Senden des ersten WUS an ein Endgerät in dem Erkennungsfenster (S220);
wobei das erste WUS einen zweiten Informationstyp anzeigt, der eine von einer vollständigen Aufweckanzeigeinformation, Systemnachrichtenänderungsanzeigeinformation oder Messanzeigeinformation umfasst, so dass das Endgerät einen physikalischen Downlink-Steuerkanal (PDCCH) erkennt, einen gemeinsam genutzten physikalischen Downlink-Kanal (PDSCH), der dem erkannten PDCCH entspricht, nach einer Paging-Nachricht,
die dem erkannten PDCCH entspricht, durchsucht, als Reaktion darauf, dass keine Paging-Nachricht, die dem erkannten PDCCH entspricht, gefunden wurde, eine Kanalmessung durchführt und gemäß einem Messergebnis bestimmt, ob auf einen herkömmlichen Paging-Erkennungsprozess zurückgegriffen werden soll, oder gemäß dem Messergebnis bestimmt, ob die WUS-Erkennung fortgesetzt werden soll.

12. Endgerät, das einen Prozessor und einen Speicher umfasst, wobei der Speicher Programmbefehle speichert, die, wenn sie von dem Prozessor ausgeführt werden, den Prozessor dazu veranlassen, das Aufwecksignal (WUS)-Empfangsverfahren nach einem der Ansprüche 1 bis 10 durchzuführen.

13. System, das zum Durchführen des Aufwecksignal (WUS)-Sendeverfahrens nach Anspruch 11 konfiguriert ist.

14. Computerlesbares Speichermedium, das Programmbefehle speichert, die, wenn sie von einem Computer ausgeführt werden, den Computer dazu veranlassen, das Aufwecksignal (WUS)-Empfangsverfahren nach einem der Ansprüche 1 bis 10 zu implementieren.

15. Computerlesbares Speichermedium, das Programmbefehle speichert, die, wenn sie von einem System ausgeführt werden, das System dazu veranlassen, das Aufwecksignal (WUS)-Sendeverfahren nach Anspruch 11 zu implementieren.

## Revendications

1. Procédé de réception de signal de réveil (en Anglais WUS pour « Wake-Up Signal ») appliqué à un dispositif terminal, le procédé comprenant :
déterminer une fenêtre de détection correspondant à un premier WUS (S110) ;
détecter, dans la fenêtre de détection, le premier WUS envoyé par un nœud de réseau (S120) ;
détecter un canal de commande de liaison descendante physique (en Anglais PDCCH pour « Physical Downlink Control Channel ») en réponse au premier WUS détecté indiquant un deuxième type d'informations, dans lequel le deuxième type d'informations est utilisé pour représenter au moins une parmi informations d'indication de réveil complet, informations d'indication de changement de message de système ou informations d'indication de mesure ;
ou sauter la détection du PDCCH en réponse au premier WUS non détecté ; et
rechercher un canal partagé de liaison descendante physique (en Anglais PDSCH pour « Physical Downlink Shared Channel ») correspondant au PDCCH détecté pour un message de radiomessagerie correspondant au PDCCH détecté ; et
en réponse à aucun message de radiomessagerie correspondant au PDCCH détecté n'étant trouvé, effectuer une mesure de canal, et déterminer, en fonction d'un résultat de mesure, s'il faut revenir à un processus de détection de radiomessagerie conventionnel, ou déterminer, en fonction du résultat de mesure, s'il faut continuer la détection de WUS.

2. Procédé selon la revendication 1, comprenant en outre :
détecter un deuxième WUS envoyé par le nœud de réseau selon une indication d'une règle prédéfinie déterminant, selon une règle prédéfinie, que la détection d'un deuxième WUS doit être réalisée, et détecter le deuxième WUS envoyé par le nœud de réseau.

3. Procédé selon la revendication 2, dans lequel la règle prédéfinie comprend au moins l'un des éléments suivants :
en réponse au premier WUS détecté indiquant un premier type d'informations, la détection du deuxième WUS est nécessaire, dans lequel le premier type d'informations comprend des informations d'indication de réveil ou des deuxièmes informations de position de WUS ;
en réponse au premier WUS détecté indiquant un deuxième type d'informations, la détection du deuxième WUS est ignorée, dans lequel le deuxième type d'informations comprend une quelconque parmi informations d'indication de réveil complet, informations d'indication de changement de message de système ou informations d'indication de mesure ;
en réponse à la détection du premier WUS, la détection du deuxième WUS est nécessaire ;
en réponse au premier WUS non détecté, la détection du deuxième WUS est ignorée ; ou
en réponse à la signalisation qui indique la détection du deuxième WUS en cours de réception, la détection du deuxième WUS est nécessaire.

4. Procédé selon la revendication 2, dans lequel la détection du deuxième WUS envoyé par le nœud de réseau comprend :
déterminer une deuxième position de domaine temporel ; et
détecter, à la deuxième position de domaine temporel, le deuxième WUS envoyé par le nœud de réseau.

5. Procédé selon la revendication 4, dans lequel la détermination d'une deuxième position de domaine temporel comprend un parmi :
déterminer la deuxième position de domaine temporel en fonction d'une première position de domaine temporel et d'un premier décalage de domaine temporel ;
déterminer la deuxième position de domaine temporel en fonction de la première position de domaine temporel, du premier décalage de domaine temporel et d'un deuxième numéro de groupe ;
déterminer la deuxième position de domaine temporel en fonction de la première position de domaine temporel, du premier décalage de domaine temporel et d'un indice de position de domaine temporel ; ou
déterminer la deuxième position de domaine temporel en fonction des deuxièmes informations de position de WUS portées par le premier WUS,
dans lequel la deuxième position de domaine temporel est une position de domaine temporel dans laquelle le deuxième WUS est situé, ou une position de domaine temporel dans laquelle le 1^{er} WUS dans une pluralité de premiers WUSs qui correspond au deuxième WUS est situé, ou une position de domaine temporel dans laquelle le dernier WUS dans la pluralité de premiers WUSs qui correspond au deuxième WUS est situé.

6. Procédé selon la revendication 5, dans lequel la première position de domaine temporel est déterminée selon au moins une parmi :
la première position de domaine temporel étant une position de domaine temporel dans laquelle le premier WUS est détecté ;
la première position de domaine temporel étant une position de début de la fenêtre de détection correspondant au premier WUS ;
la première position de domaine temporel étant une position terminale de la fenêtre de détection correspondant au premier WUS ;
la première position de domaine temporel étant une position de domaine temporel dans laquelle se trouve le 1^{er} WUS dans une pluralité de WUSs correspondant au premier WUS ; ou
la première position de domaine temporel étant une position de domaine temporel dans laquelle se trouve le dernier WUS dans la pluralité de WUSs correspondant au premier WUS.

7. Procédé selon la revendication 5, dans lequel le premier décalage de domaine temporel est déterminé en fonction d'au moins une parmi informations d'indication de signalisation, informations de décalage prédéfinies, informations de capacité de dispositif terminal ou informations d'espacement de sous-porteuses.

8. Procédé selon la revendication 5, dans lequel l'indice de position de domaine temporel est déterminé en fonction d'un indice d'un deuxième groupe dans lequel le dispositif terminal est situé, ou déterminé en fonction d'une correspondance prédéfinie entre l'indice de position de domaine temporel et une position de ressource de domaine temporel.

9. Procédé selon la revendication 4, dans lequel la détection, dans la deuxième position de domaine temporel, du deuxième WUS envoyé par le nœud de réseau comprend :
déterminer, en fonction de deuxièmes informations, une deuxième position de domaine de fréquence cible correspondant au deuxième WUS ; et
déterminer, en fonction des deuxièmes informations, une deuxième séquence correspondant au deuxième WUS,
dans lequel les deuxièmes informations sont déterminées par au moins un parmi : un indice de dispositif terminal, un deuxième indice de groupe correspondant au dispositif terminal, un deuxième numéro de groupe, ou une indication de signalisation.

10. Procédé selon la revendication 1, dans lequel une position de la fenêtre de détection correspondant au premier WUS est déterminée par un parmi :
déterminer, en fonction des informations de fenêtre de détection indiquées par signalisation, la position de la fenêtre de détection correspondant au premier WUS, dans lequel les informations de fenêtre de détection comprennent au moins un entre : une période de la fenêtre de détection, un décalage dans le domaine temporel de la fenêtre de détection ou une longueur dans le domaine temporel de la fenêtre de détection ;
déterminer, selon un accord avec le nœud de réseau, la position de la fenêtre de détection correspondant au premier WUS ; ou
déterminer, en fonction d'une position de domaine temporel prédéfinie et d'une position dans laquelle le premier WUS est détecté, la position de la fenêtre de détection correspondant au premier WUS.

11. Procédé d'envoi d'un signal de réveil, WUS, appliqué à un nœud de réseau, le procédé comprenant :
déterminer une fenêtre de détection correspondant à un premier WUS (S210) ; et
envoyer le premier WUS à un dispositif terminal dans la fenêtre de détection (S220) ;
dans lequel le premier WUS indique un deuxième type d'informations comprenant une quelconque parmi : informations d'indication de réveil complet, informations d'indication de changement de message de système ou informations d'indication de mesure, de sorte que le dispositif terminal détecte un canal de contrôle de liaison descendante physique, PDCCH, recherche un canal partagé de liaison descendante physique, PDSCH, correspondant au PDCCH détecté pour un message de radiomessagerie correspondant au PDCCH détecté, en réponse à l'absence de message de radiomessagerie correspondant au PDCCH détecté, réalise une mesure de canal et détermine, en fonction d'un résultat de mesure, s'il faut revenir à un processus de détection de radiomessagerie conventionnel, ou détermine, en fonction du résultat de mesure, s'il faut continuer la détection de WUS.

12. Dispositif terminal, comprenant un processeur et une mémoire, dans lequel la mémoire stocke des instructions de programme qui, lorsqu'elles sont exécutées par le processeur, amènent le processeur à réaliser le procédé de réception de signal de réveil, WUS, selon l'une quelconque des revendications 1 à 10.

13. Système configuré pour réaliser le procédé d'envoi de signal de réveil, WUS, selon la revendication 11.

14. Support de stockage lisible par ordinateur stockant des instructions de programme qui, lorsqu'elles sont exécutées par un ordinateur, amènent l'ordinateur à mettre en oeuvre le procédé de réception de signal de réveil (WUS) selon l'une quelconque des revendications 1 à 10.

15. Support de stockage lisible par ordinateur stockant des instructions de programme qui, lorsqu'elles sont exécutées par un système, amène le système à mettre en oeuvre le procédé d'envoi de signal de réveil (WUS) selon la revendication 11.
